(19) Europäisches Patentamt
European Patent Office
Office européen des brevets

(11) **EP 4 752 995 A1**

(12) **EUROPEAN PATENT APPLICATION**
published in accordance with Art. 153(4) EPC

(43) Date of publication:
**03.06.2026 Bulletin 2026/23**

(21) Application number: **24889078.2**

(22) Date of filing: **05.11.2024**

(51) International Patent Classification (IPC):
**H01M 10/04** (2006.01)   **G01B 5/06** (2006.01)
**G01B 5/00** (2006.01)

(52) Cooperative Patent Classification (CPC):
**G01B 5/00; G01B 5/06; H01M 10/04;** Y02E 60/10

(86) International application number:
**PCT/KR2024/017236**

(87) International publication number:
**WO 2025/100890 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.11.2023   KR 20230151556
04.11.2024   KR 20240154615

(71) Applicant: **LG Energy Solution, Ltd.**
**Seoul 07335 (KR)**

(72) Inventors:
• **LEE, Gitaek**
**Daejeon 34122 (KR)**
• **RA, Youngmin**
**Daejeon 34122 (KR)**
• **YOON, Seog Jin**
**Daejeon 34122 (KR)**
• **AN, Chihun**
**Daejeon 34122 (KR)**
• **PARK, Hyunjae**
**Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **APPARATUS FOR MANUFACTURING BATTERY**

(57)    A battery cell manufacturing device according to certain embodiments of the present disclosure may comprise: a transfer unit that transfers a substrate in one direction, an upper roller and a lower roller that are respectively positioned on upper sides and lower sides with reference to the transfer unit and are in contact with the transfer unit, and a sensing unit that measures a thickness of the substrate passing between the upper roller and the lower roller.

[FIG. 2]

**Description**

**[TECHNICAL FIELD]**

<u>Cross-Reference to Related Application(s)</u>

This application claims priority to and the benefit of Korean Patent Application no. KR10-2023-0151556, filed on November 6, 2023 and Korean Patent Application no. KR10-2024-0154615, filed on November 4, 2024, the entire contents of which are incorporated herein by reference.

The present disclosure relates to a battery cell manufacturing device, and more particularly, to a battery cell manufacturing device that can accurately measure the thickness of a substrate while reducing the influence of vibration.

**[BACKGROUND ART]**

The use of mobile devices such as cell phones, laptops, camcorders and digital cameras, and energy storage systems(ESS) has been routinized in modem society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles(EV), hybrid electric vehicles(HEV), plug-in hybrid electric vehicles(P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they are freely rechargeable, have low self-discharge rates, and have high energy density.

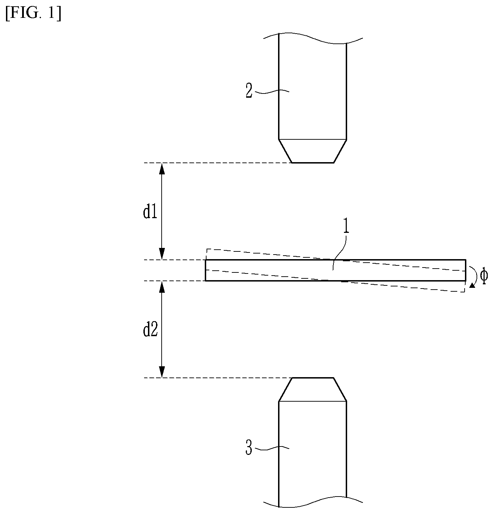

FIG. 1 is a conceptual diagram showing a battery cell manufacturing device according to a prior art.

Referring to FIG. 1, a conventional battery cell manufacturing device may include confocal sensors 2 and 3 for measuring the thickness of a substrate 1. The confocal sensors 2 and 3 are a type of noncontact type displacement measuring device, and principles thereof are well-known technology, so a detailed description thereof is omitted.

The confocal sensors 2 and 3 may include a first confocal sensor 2 and a second confocal sensor 3 that are disposed so as to face each other. More specifically, the first confocal sensor 2 is positioned on an upper side of the second confocal sensor 3, and the first confocal sensor 2 and the second confocal sensor 3 may be disposed so as to face each other in the vertical direction.

The first confocal sensor 2 may be positioned on an upper side of the substrate 1, and the second confocal sensor 3 may be positioned on a lower side of the substrate 1. That is, the substrate 1 may be positioned between the first confocal sensor 2 and the second confocal sensor 3.

The first confocal sensor 2 can measure the distance d1 (hereinafter, 'first distance') to one surface of the substrate 1, i.e., an upper surface of the substrate 1. In addition, the second confocal sensor 3 can measure the distance d2 (hereinafter, 'second distance') to the other surface of the substrate 1, that is, a lower surface of the substrate 1. The thickness of the substrate 1 can be calculated based on the first distance d1 and the second distance d2. That is, since the distance between the first confocal sensor 2 and the second confocal sensor 3 can be set in advance, the value obtained by subtracting the first distance d1 and the second distance d2 from the distance between the first confocal sensor 2 and the second confocal sensor 3 can be calculated as the thickness of the substrate 1.

However, this method has a problem in that it is difficult to make accurate measurement due to differences in reflectance, absorption rate, etc. of the substrate 1. In addition, since the thickness of the substrate 1 is measured during the travelling of the substrate 1, an error due to vibration is likely to occur. During the battery cell manufacturing process (e.g., during the process in which the substrate is cut by a cutting unit), vibration may occur in the battery cell manufacturing device. As illustrated in FIG. 1, the substrate 1 may vibrate at a certain angle ($\phi$) due to vibration. This may cause problems with the reliability of the thickness measurement of the substrate 1 via the confocal sensors 2 and 3.

**[DETAILED DESCRIPTION OF THE INVENTION]**

**[Technical Problem]**

Therefore, it is an object of the present disclosure to provide a battery cell manufacturing device that can accurately measure the thickness of a substrate while reducing the influence of vibration.

However, the technical objects solved by the embodiments of the present disclosure are not limited to those disclosed above, and may be expanded in various ways within the scope of the technical idea included in the present disclosure.

**[Technical Solution]**

According to certain aspects of the present disclosure, there is provided a battery cell manufacturing device, comprising: a transfer unit that transfers a substrate in one direction, an upper roller and a lower roller that are respectively positioned on upper sides and lower sides with reference to the transfer unit and are in contact with the transfer unit, and a sensing unit that measures a thickness of the substrate passing between the upper roller and the lower roller.

The upper roller is movable in an up-and-down direction perpendicular to a surface of the transfer unit, and the sensing unit may measure the thickness of the substrate based on an amount of movement of the upper roller in the up-and-down direction that occurs while passing the substrate between the upper roller and the lower roller.

The sensing unit comprises a sensor housing that is disposed so as to be spaced apart from the upper roller in the up-and-down direction, and a distance measuring sensor that is fixed to the sensor housing and measures a distance from the upper roller, and the thickness of the substrate may be measured based on an amount of change in the distance from the upper roller measured by the distance measuring sensor.

The battery cell manufacturing device may further comprise: a main frame that supports the upper roller and the lower roller, an upper roller frame that is connected to the main frame and rotatably supports the upper roller, and a lower roller frame that is connected to the main frame and rotatably supports the lower roller.

The main frame comprises a guide groove extending in the up-and-down direction so as to guide the up-and-down directional movement of the upper roller, and the upper roller frame may comprise a guide member that is inserted into the guide groove.

The battery cell manufacturing device may further comprise a pressing unit that presses the upper roller toward the transfer unit.

The pressing unit further comprises an elastic member that is disposed inside the sensor housing, and a pressing member that passes through the sensor housing and is connected to the upper roller frame, and the elastic member may press the pressing member toward the transfer unit.

The pressing unit may further comprise an adjustment plate that adjusts a degree to which the elastic member presses the pressing member toward the transfer unit.

The pressing unit may further comprise an adjustment member that is connected to the adjustment plate and controls the up-and-down directional movement of the adjustment plate.

The adjustment member comprises a screw part that passes through the adjustment plate and is formed with a screw thread, and a head part that is connected to the screw part, and the up-and-down directional movement of the adjustment plate may be adjusted by a rotation of the head part.

The lower roller frame may be positionally fixed relative to the transfer unit.

The upper roller frame may further comprise an auxiliary roller that is in contact with the upper roller.

The upper roller frame extends along a width direction of the transfer unit, and the auxiliary roller may be disposed at the middle point of the upper roller frame with respect to the width direction.

A rotation speed of the upper roller may be controlled based on a transfer speed of the transfer unit.

The rotation speed of the upper roller may be controlled so that a surface speed of the upper roller is between 90% and 110% of the transfer speed of the transfer unit.

The upper roller may comprise at least one of a DLC (Diamond-like carbon) coating layer and a HCr (Hard Chromium Plating) coating layer.

The substrate may be transferred along a transfer direction of the transfer unit so as to have a predetermined separation gap from adjacent substrates, and the upper roller may be in contact with the transfer unit within the separation gap when the upper roller passes between the adjacent substrates.

A radius of the upper roller may be determined based on the predetermined separation gap.

The radius of the upper roller may be smaller than or equal to a radius of the lower roller.

**[Advantageous Effects]**

A battery cell manufacturing device according to certain embodiments can reduce the influence of vibration of the transfer unit caused by a battery cell manufacturing process, so that the thickness of the substrate can be accurately measured without being substantially affected by vibration even in an environment where vibration occurs.

In addition, the battery cell manufacturing device can obtain a thickness measurement data of the substrate in real time, and the thickness measurement data can be used to detect and manage defects in thickness.

The effects of the present disclosure are not limited to the effects mentioned above and additional other effects not described above will be clearly understood from the description of the appended claims by those skilled in the art.

**[BRIEF DESCRIPTION OF THE DRAWING]**

FIG. 1 is a conceptual diagram showing a battery cell manufacturing device according to a prior art.

FIG. 2 is a perspective view of a battery cell manufacturing device according to certain embodiments of the present disclosure.

FIG. 3 is a front view of the battery cell manufacturing device shown in FIG. 2.

FIG. 4 is a diagram for explaining the up-and-down movement of the upper roller in the battery cell manufacturing device shown in FIG. 2.

FIG. 5 is a diagram for explaining a pressing unit for pressing the upper roller toward the transfer unit.

FIG. 6 is a front view of a battery cell manufacturing device according to certain other embodiments of the present disclosure.

FIG. 7 is a diagram for explaining the separation gap between the diameter of the upper roller and the substrate in the battery cell manufacturing device according to certain embodiments of the present disclosure.

FIG. 8 is a diagram for explaining an example for calculating the diameter of the upper roller shown in FIG. 7.

## [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Embodiments of the present disclosure will be described with reference to the accompanying drawings.

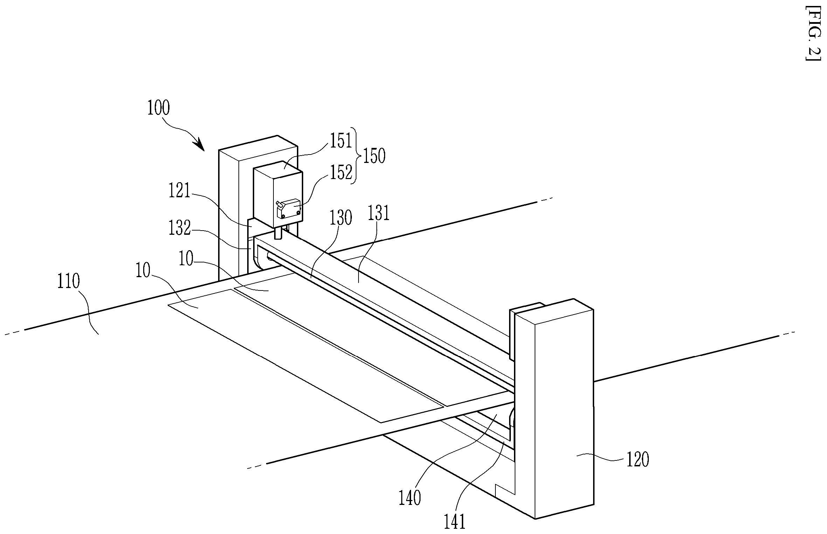

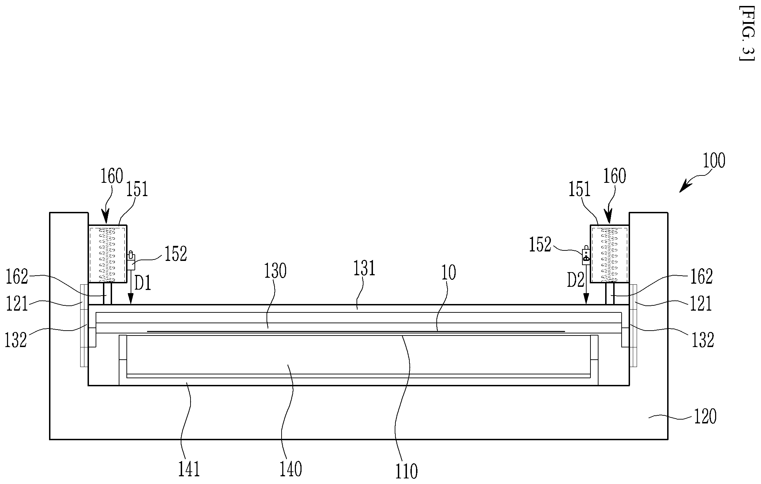

FIG. 2 is a perspective view of a battery cell manufacturing device according to certain embodiments of the present disclosure. FIG. 3 is a front view of the battery cell manufacturing device shown in FIG. 2.

Referring to FIGS. 2 and 3, a battery cell manufacturing device 100 includes a transfer unit 110 that transfers a substrate 10 in one direction, a main frame 120, an upper roller 130 and a lower roller 140 that are respectively positioned on the upper sides and lower sides with reference to the transfer unit 110 and are in contact with the transfer unit 110, and a sensing unit 150 that measures the thickness of the substrate 10 passing between the upper roller 130 and the lower roller 140.

The substrate 10 may be, for example, a member related to a battery cell, such as a unit cell or an electrode assembly. Specifically, the unit cell may be formed by cutting the separator sheet after a laminating process in which heat and pressure are applied to a stacked body in which an electrode and a separator sheet are stacked. Further, such unit cells may be assembled to form an electrode assembly of a predetermined shape. Additionally, the electrode assembly may include a half-cell in which a separator is added to one outer surface of a positive electrode or a negative electrode, a mono-cell in which a positive electrode/separator/negative electrode are stacked, and a bi-cell formed of a positive electrode/separator/negative electrode/separator/positive electrode, or formed of a negative electrode/separator/positive electrode/separator/ negative electrode. However, the type of the substrate 10 is not limited by those set forth above. The substrate 10 can be included in certain embodiments of the present disclosure as long as it has a configuration that can pass between the upper roller 130 and the lower roller 140, and for example, it may be an electrode, a separator sheet, a pouch case, a battery cell, etc., in which an electrode mixture in which a positive or negative electrode active material, a conductive material, and a binder are mixed with a current collector is coated on one surface or both surfaces.

The transfer unit 110 is a unit for transferring the substrate 10 in one direction, and may have the form of a conveyor by way of example. The conveyor is driven by a driving device not shown, and the substrate 10 may be transferred according to the progress of the conveyor.

The main frame 120 is a member for supporting each component of the battery cell manufacturing device 100 including the upper roller 130 and the lower roller 140. The main frame 120 may include side surface parts formed such that both ends of the main frame 120 protrude to the upper side in order to support both ends of the upper roller 130 and the lower roller 140. For example, the main frame 120 may have a ⊥⌐-shape. The main frame 120 shown in FIGS. 2 and 3 is illustrated as an integrated unit, but is not limited to the illustrated shape. For example, the main frame 120 may have a shape in which side surface parts supporting the upper roller 130 and the lower roller 140 are coupled to the main frame 120.

The upper roller 130 is positioned on the upper side of the transfer unit 110 with reference to the transfer unit 110. The upper roller 130 is movable in an up-and-down direction perpendicular to the surface of the transfer unit 110. Therefore, the upper roller 130 is in contact with the transfer unit 110 when there is no substrate 10 being transferred through the transfer unit 110. If the substrate 10 being transferred through the transfer unit 110 passes between the upper roller 130 and the lower roller 140, the upper roller can move in the up-and-down direction, more specifically, in the upward direction. Meanwhile, the specific configuration in which the upper roller 130 moves in the up-and-down direction will be described later.

When the surface speed of the upper roller 130 differs from the transfer speed of the transfer unit 110, friction may occur on the upper surface of the substrate 10 due to the upper roller 130. Such friction may cause the substrate 10 to become misaligned as it passes between the upper roller 130 and the lower roller 140, or can cause damage to the surface of the substrate 10.

In order to prevent the positional misalignment and/or surface damage of the substrate 10 as described above, the rotation speed of the upper roller 130 may be controlled based on the transfer speed of the transfer unit 110. For example, the rotation speed of the upper roller 130 may be controlled so that the surface speed of the upper roller 130 is between 90% and 110% of the transfer speed of the transfer unit 110. Preferably, the rotation speed of the upper roller 130 may be controlled so that the surface speed of the upper roller 130 is equal to the transfer speed of the transfer unit 110.

The upper roller 130 may include at least one of a DLC (Diamond-like carbon) coating layer and an HCr (Hard Chromium Plating) coating layer, but is not limited to those set forth above, and any known coating material can be used without limitation as long as it satisfies the material requirements of the coating layer.

The upper roller 130 of the battery cell manufacturing device 100 is in contact with the substrate 10 during the battery cell manufacturing process, so that metal foreign matter may be generated due to wear and other causes. Such metal foreign matter may cause problems such as low voltage failure of the battery cell, which may lead to battery failure. Therefore, by forming the above-mentioned coating layer on the surface of the upper roller 130, it is possible to reduce surface wear of the upper roller 130 and thereby prevent the possibility of problems caused by metal foreign matter.

The lower roller 140 is positioned on the lower side of the transfer unit 110 with reference to the transfer unit 110. The lower roller 140 is positionally fixed relative to the transfer unit 110. Therefore, the lower roller 140 is always in contact with the transfer unit 110 at the lower side of the transfer unit 110.

The sensing unit 150 can measure the thickness of the substrate 10 based on the amount of movement of the upper roller 130 in the up-and-down direction that occurs while passing the substrate 10 between the upper roller 130 and the lower roller 140. The sensing unit 150 includes a sensor housing 151 disposed so as to be spaced apart from the upper roller 130 in the up-and-down direction, and a distance measuring sensor 152 that is fixed to the sensor housing 151 and measures the distance between the sensor housing 151 and the upper roller 130.

The sensor housing 151 is disposed spaced apart upwards to the upper roller 130 and can be fixed to the main frame 120. Since the sensor housing 151 is fixed to the main frame 120, the distance measuring sensor 152 fixed to the sensor housing 151 can be positionally fixed in the up-and-down direction. The distance measuring sensor 152 can measure the amount of change in the distance that the upper roller 130 moves in the up-and-down direction. Thereby, the thickness of the substrate 10 can be measured based on the amount of change in the distance between the upper rollers 130 measured by the distance measuring sensor 152.

The distance measuring sensor 152 can measure the distance up to the upper roller 130 in a noncontact manner. For example, the distance measuring sensor 152 can measure the distance by emitting light (e.g., laser or infrared, etc.) from a light source toward the upper roller 130. More specifically, the distance measuring sensor 152 can emit light toward the upper roller frame 131 and measure the distance D from the upper roller frame 131. Since the upper roller 130 is supported by the upper roller frame 131, the distance up to the upper roller 130 can be converted through the distance D from the upper roller frame 131. That is, the distance measuring sensor 152 emits light from the light emitting unit to the upper roller frame 131 and receives the reflected light. The distance measuring sensor 152 measures the amount of received light or the amount of voltage change caused by the received light, and thus can measure the distance D from the upper roller frame 131 in a noncontact manner.

The distance measuring sensor 152 may be placed only on one side of the upper roller 130 so as to measure the distance of either side of the upper roller 130, however, as shown in FIG. 3, it is preferable to dispose it on both sides. Therefore, a first distance D1 can be measured by the distance measuring sensor 152 disposed on one side of the upper roller 130, and a second distance D2 can be measured by the distance measuring sensor 152 disposed on the other side of the upper roller 130. The thickness of the above-mentioned substrate 10 can be calculated by the average value of the first distance D1 and the second distance D2.

The battery cell manufacturing device 100 according to certain embodiments of the present disclosure does not directly measure the thickness of the substrate 10, but measures the amount of movement of the upper roller 130 in the up-and-down direction to convert the thickness of the substrate 10, so that no error occurs due to the material of the substrate 10, and errors due to vibrations that occur as the substrate 10 travels can be reduced.

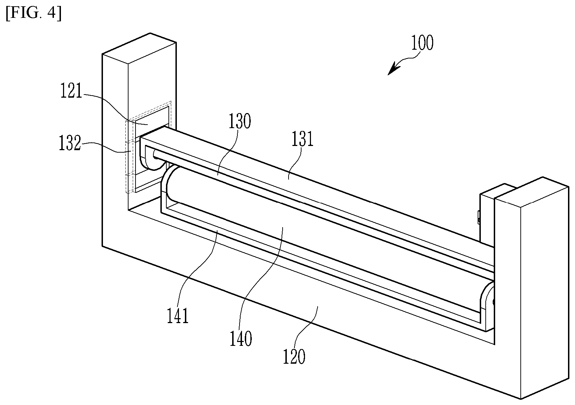

FIG. 4 is a diagram for explaining the up-and-down movement of the upper roller in the battery cell manufacturing device shown in FIG. 2.

Referring to FIG. 4, the battery cell manufacturing device 100 includes an upper roller frame 131 that rotatably supports the upper roller 130 and a lower roller frame 141 that rotatably supports the lower roller 140. The upper roller frame 131 and the lower roller frame 141 can each be connected to the main frame 120.

As mentioned above, the upper roller 130 is movable in the up-and-down direction perpendicular to the surface of the transfer unit 110. The upper roller frame 131 is connected to the main frame 120 so as to be movable in the up-and-down direction. For this purpose, the main frame 120 includes a guide groove 121 extending in the up-and-down direction so as to guide the up-and-down directional movement of the upper roller 130, and the upper roller frame 131 includes a guide member 132 inserted into the guide groove 121. Since the guide member 132 of the upper roller frame 131 is movable in the up-and-down direction along the space formed by the guide groove 121, the upper roller 130 rotatably supported on the upper roller frame 131 is also movable in the up-and-down direction.

The lower roller 140 is positionally fixed relative to the transfer unit 110 at the lower side of the transfer unit 110. That is, since the lower roller frame 141 is connected to the main frame 120 so that the upper and lower directional positions based on the transfer unit 110 are fixed, the lower roller 140 rotatably supported on the lower roller frame 141 may also be positionally fixed relative to the transfer unit 110.

Since the lower roller 140 is positionally fixed while being in contact with the transfer unit 110 at the lower side of the transfer unit 110, the lower roller 140 may support the substrate 10 when the substrate 10 passes between the upper roller 130 and the lower roller 140. At the same time, the upper roller 130 may press the substrate 10 by its own load. Thereby, when the battery cell manufacturing device 100 measures the thickness of the substrate 10, the influence of vibration of the transfer unit 110 caused by the battery cell manufacturing process can be reduced, whereby the battery cell manufacturing device 100 can accurately measure the thickness of the substrate 10 without being substantially affected by a vibration even in an environment where vibration occurs.

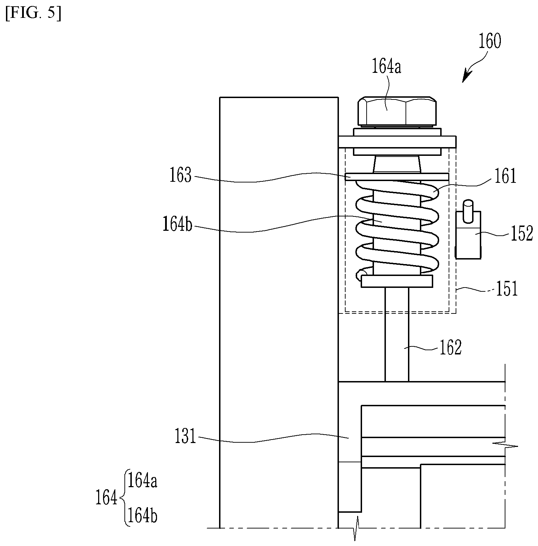

FIG. 5 is a diagram for explaining a pressing unit for pressing the upper roller toward the transfer unit.

Referring again to FIGS. 3 and 5, the battery cell manufacturing device 100 may include a pressing unit 160 that presses the upper roller 130 toward the transfer unit 110. The pressing unit 160 includes: an elastic member 161 that is disposed inside the sensor housing 151, a pressing member 162 that passes through the sensor housing 151 and is connected to the upper roller frame 131, an adjustment plate 163 that adjusts the degree to which the elastic member 161 presses the pressing member 162 toward the transfer unit 110, and an adjustment member 164 that is connected to the adjustment plate 163 and controls the up-and-down directional movement of the adjustment plate 163.

The elastic member 161 is a member that is disposed inside the sensor housing 151 and provides a pressing force for pressing the upper roller 130 toward the transfer unit 110. For example, the elastic member 161 may be a spring member. Meanwhile, the type of the elastic member 161 is not limited to those set forth above, and any member that can provide a pressing force to the upper roller 130 may be variously modified or changed in accordance with the environment in which the present disclosure is implemented. The pressing force of the elastic member 161 may be generated by elastic force. That is, when the elastic member 161 is compressed, the elastic member 161 may press the upper roller 130 toward the transfer unit 110 by the elastic energy stored in the elastic member 161. Since the upper roller 130 is pressed toward the transfer unit 110, the upper roller 130 can press the substrate 10 by the pressing force of the elastic member 161 along with its own load. Therefore, when the battery cell manufacturing device 100 measures the thickness of the substrate 10, the influence of vibration of the transfer unit 110 caused by the battery cell manufacturing process can be further reduced.

The pressing member 162 is a member that transmits the elastic force of the elastic member 161 to the upper roller 130. The pressing member 162 may pass through the sensor housing 151 and be connected to the upper roller frame 131. The elastic member 161 disposed inside the sensor housing 151 can press the pressing member 162 toward the transfer unit 110. One end of the pressing member 162 can be connected to the elastic member 161, and the other end of the pressing member 162 can be connected to the upper roller frame 131. Thereby, the pressing force by the elastic member 161 can be transmitted to the upper roller frame 131 through the pressing member 162, and transmitted to the upper roller 130 supported by the upper roller frame 131.

Meanwhile, the position where the elastic member 161 is disposed is not limited to those set forth above. The elastic member 161 may be disposed at a position where the upper roller 130 can be pressed toward the transfer unit 110. For example, although not shown in FIG. 3, the elastic member 161 may be disposed in a space formed separately in the main frame 120 (e.g., a space further formed in the guide groove 121) to press the upper roller frame 131 toward the transfer unit 110.

The adjustment plate 163 is a member that supports the elastic member 161. The adjustment plate 163 can adjust the degree to which the elastic member 161 presses the pressing member 162 toward the transfer unit 110. The adjustment plate 163 can move in the up-and-down direction, and the degree to which the elastic member 161 is compressed in advance can be adjusted according to the position of the adjustment plate 163. For example, when the adjustment plate 163 moves downward, the elastic member 161 is compressed, and the force with which the elastic member 161 presses the pressing member 162 can increase. Thereby, the degree to which the pressing member 162 presses the upper roller frame 131 increases. On the contrary, when the adjustment plate 163 moves upward, the elastic member 161 may be stretched, and the force with which the elastic member 161 presses the pressing member 162 may decrease. Thereby, the degree to which the pressing member 162 presses the upper roller frame 131 decreases.

The adjustment member 164 may include a screw part 164b that passes through the adjustment plate 163 and is formed with a screw thread, and a head part 164a that is connected to the screw part 164b. The adjustment plate 163 may be engaged with the screw threads of the screw part 164b. The up-and-down directional movement of the adjustment plate 163 may be adjusted by the rotation of the head part 164a. Specifically, the screw part 164b rotates together with the rotation of the head part 164a, and the adjustment plate 163 may move in an up-and-down direction by the rotation of the screw part 164b. For example, when the head part 164a rotates clockwise, the adjustment plate 163 may move upward, and when the head part 164a rotates counterclockwise, the adjustment plate 163 may move downward.

As mentioned above, the upper-and-lower directional positions of the adjustment plate 163 are adjusted by the adjustment member 164 of the pressing unit 160, and the degree (force) with which the upper roller 130 presses the substrate 10 can be determined according to the position of the adjustment plate 163. For example, the substrate 10 passing between the upper roller 130 and the lower roller 140 of the battery cell manufacturing device 100 according to certain embodiments of the present disclosure may be an elastic body (e.g., the elastic modulus of the substrate 10 is between about 1 GPa and about 2 GPa). The upper roller 130 can press the substrate 10 in proportion to the loading amount of the substrate 10 and the elastic modulus according to the type of the substrate 10, and the degree of pressing of the upper roller 130 can be adjusted by the pressing unit 160.

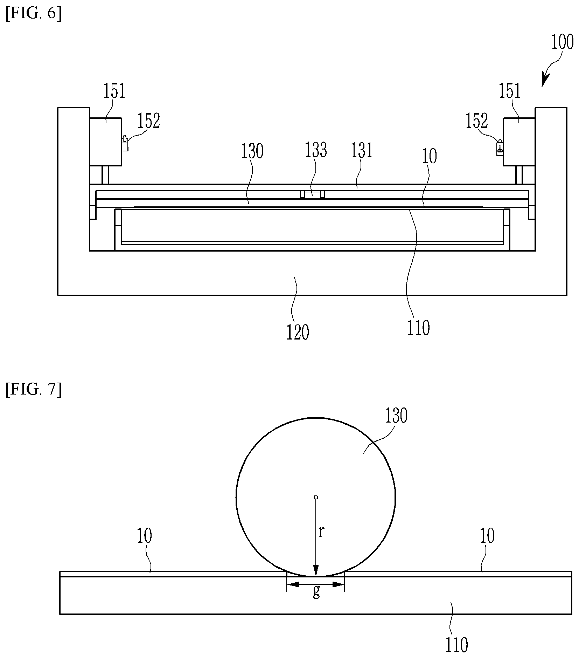

FIG. 6 is a front view of a battery cell manufacturing device according to certain other embodiments of the present disclosure.

Referring to FIG. 6, the upper roller frame 131 may include an auxiliary roller 133 that is in contact with the upper roller 130. The upper roller frame 131 extends along the width direction of the transfer unit 110, and the auxiliary roller 133 may be disposed at the middle point of the upper roller frame 131 in the longitudinal direction.

As mentioned above, the upper roller 130 may be pressed toward the transfer unit 110 when measuring the thickness of the substrate 10. Thereby, bending may occur in the upper roller 130. When bending occurs in the upper roller 130, an error due to bending may occur between the actual thickness and the measured thickness of the substrate 10.

Since the auxiliary roller 133 is in contact with the upper roller 130 in the upper direction of the upper roller 130, the auxiliary roller 133 can prevent bending of the upper roller 130 by offsetting the force applied by the substrate 10.

Meanwhile, the number and arrangement of the auxiliary rollers 133 are not limited to those set forth above. For example, the auxiliary rollers 133 may be formed in a plurality of numbers, and the plurality of auxiliary rollers 133 may be disposed at regular intervals from each other.

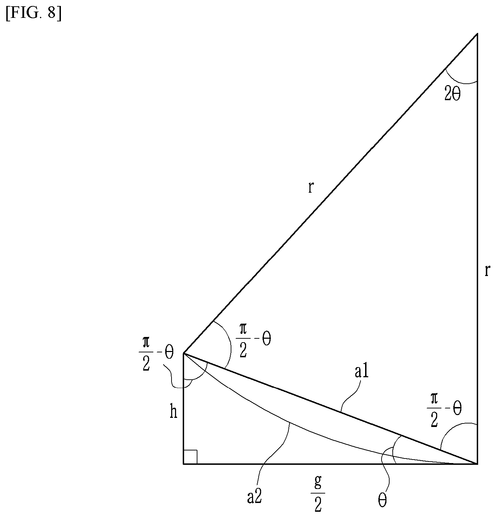

FIG. 7 is a diagram for explaining the separation gap between the diameter of the upper roller and the substrate in the battery cell manufacturing device according to certain embodiments of the present disclosure. FIG. 8 is a diagram for explaining an example for calculating the diameter of the upper roller shown in FIG. 7.

Referring to FIGS. 7 and 8, the substrate 10 can be transferred along the transfer direction of the transfer unit 110 so as to have a predetermined separation gap g between adjacent substrates 10. At this time, the upper roller 130 can be in contact with the transfer unit 110 within the separation gap g when the roller passes between adjacent substrates 10. That is, the thickness h of each substrate 10 in the battery cell manufacturing device 100 can be obtained by the difference between the distance in the state of contacting the transfer unit 110 and the distance in the state of contacting the substrate 10 (i.e., the amount of movement in the upper roller 130 in the up-and-down direction that occurs when the substrate 10 passes between the upper roller 130 and the lower roller 140).

The radius of the upper roller 130 for allowing the upper roller 130 to come into contact with the transfer unit 110 within the above-mentioned separation gap g may be determined based on the separation gap g between adjacent substrates.

The diagram shown in FIG. 8 simplifies the shapes of the upper roller 130 and the substrate 10 to explain an example for calculating the maximum radius (r) of the upper roller 130. Specifically, the right triangle, isosceles triangle, and sectorial figures are schematic diagrams of the portions where the upper roller 130 contacts the substrate 10 and the transfer unit 110, respectively. The height h of the right triangle corresponds to the thickness of the substrate 10, and the length g/2 of the base corresponds to half of the separation gap g between the substrates 10. In the isosceles triangle, the two sides with the same length correspond to the maximum radius r of the upper roller 130.

First, the angle θ in the right triangle is calculated by the following Mathematical Equation 1.

[Mathematical Equation 1]

$$\theta = \tan^{-1}\left(\frac{2h}{g}\right)$$

Next, since the height h of a right triangle can generally be very small compared to the separation gap g, the length a1 of the hypotenuse of the right triangle and the length a2 of the arc of the sector can be approximately equal. At this time, the maximum radius r of the upper roller 130 is calculated by the following Mathematical Equation 2.

[Mathematical Equation 2]

$$r = \frac{\sqrt{h^2 + (\frac{g}{2})^2}}{2\theta}$$

Therefore, when the values of the thickness h of the substrate 10 and the separation gap g between the substrates 10 can be obtained, the maximum radius r of the upper roller 130 can be calculated by Mathematical Equations 1 and 2. Since the maximum radius r of the upper roller 130 is calculated according to the above-mentioned calculation, the radius of the upper roller 130 can be smaller than or equal to the maximum radius r calculated by the values of the thickness h of the given substrate 10 and the separation gap g between the substrates 10.

Meanwhile, for the convenience of explanation, the above-mentioned calculation equations are calculated by approximating the length a2 of the arc of the sector of the upper roller 130 to the hypotenuse a1 of the right triangle. However, the method for calculating the maximum radius r of the upper roller 130 is not limited to those set forth above, and a more accurate numerical value of the maximum radius r of the upper roller 130 can be determined by various approaches other than the above-mentioned calculation method.

As the separation gap g of the substrates 10 is smaller, the maximum radius r of the upper roller 130 is smaller. On the other hand, since the lower roller 140 rotates according to the transfer speed of the transfer unit 110, the radius of the lower roller 140 does not need to be small. Therefore, the radius of the upper roller 130 may be smaller than or equal to the radius of the lower roller 140.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

[Description of Reference Numerals]

    10: substate
    100: battery cell manufacturing device

110: transfer unit
120: main frame
121: guide groove
130: upper roller
131: upper roller frame
132: guide member
133: auxiliary roller
140: lower roller
141: lower roller frame
150: sensing unit
151: sensor housing
152: distance measuring sensor
160: pressing unit
161: elastic member
162: pressing member
163: adjustment plate
164: adjustment member
164a: head part
164b: screw part

**Claims**

1. A battery cell manufacturing device, comprising:

   a transfer unit that transfers a substrate in one direction;
   an upper roller and a lower roller that are respectively positioned on upper sides and lower sides with reference to the transfer unit and are in contact with the transfer unit; and
   a sensing unit that measures a thickness of the substrate passing between the upper roller and the lower roller.

2. The battery cell manufacturing device of claim 1, wherein:

   the upper roller is movable in an up-and-down direction perpendicular to a surface of the transfer unit, and
   the sensing unit measures the thickness of the substrate based on an amount of movement of the upper roller in the up-and-down direction that occurs while passing the substrate between the upper roller and the lower roller.

3. The battery cell manufacturing device of claim 2, wherein:

   the sensing unit comprises a sensor housing that is disposed so as to be spaced apart from the upper roller in the up-and-down direction; and
   a distance measuring sensor that is fixed to the sensor housing and measures a distance from the upper roller, and
   the thickness of the substrate is measured based on an amount of change in the distance from the upper roller measured by the distance measuring sensor.

4. The battery cell manufacturing device of claim 3, further comprising:

a main frame that supports the upper roller and the lower roller;
an upper roller frame that is connected to the main frame and rotatably supports the upper roller; and
a lower roller frame that is connected to the main frame and rotatably supports the lower roller.

5. The battery cell manufacturing device of claim 4, wherein:

the main frame comprises a guide groove extending in the up-and-down direction so as to guide the up-and-down directional movement of the upper roller, and
the upper roller frame comprises a guide member that is inserted into the guide groove.

6. The battery cell manufacturing device of claim 5, further comprising a pressing unit that presses the upper roller toward the transfer unit.

7. The battery cell manufacturing device of claim 6, wherein:

the pressing unit comprises an elastic member that is disposed inside the sensor housing; and
a pressing member that passes through the sensor housing and is connected to the upper roller frame, and
the elastic member presses the pressing member toward the transfer unit.

8. The battery cell manufacturing device of claim 7, wherein the pressing unit further comprises an adjustment plate that adjusts a degree to which the elastic member presses the pressing member toward the transfer unit.

9. The battery cell manufacturing device of claim 8, wherein:
the pressing unit further comprises an adjustment member that is connected to the adjustment plate and controls the up-and-down directional movement of the adjustment plate.

10. The battery cell manufacturing device of claim 9, wherein:

the adjustment member comprises
a screw part that passes through the adjustment plate and is formed with a screw thread; and
a head part that is connected to the screw part, and
the up-and-down directional movement of the adjustment plate is adjusted by a rotation of the head part.

11. The battery cell manufacturing device of claim 5, wherein the lower roller frame is positionally fixed relative to the transfer unit.

12. The battery cell manufacturing device of claim 4, wherein the upper roller frame further comprises an auxiliary roller that is in contact with the upper roller.

13. The battery cell manufacturing device of claim 12, wherein:

the upper roller frame extends along a width direction of the transfer unit, and
the auxiliary roller is disposed at the middle point of the upper roller frame with respect to the width direction.

14. The battery cell manufacturing device of claim 1, wherein a rotation speed of the upper roller is controlled based on a transfer speed of the transfer unit.

15. The battery cell manufacturing device of claim 14, wherein the rotation speed of the upper roller is controlled so that a surface speed of the upper roller is between 90% and 110% of the transfer speed of the transfer unit.

16. The battery cell manufacturing device of claim 1, wherein the upper roller comprises at least one of a DLC (Diamond-like carbon) coating layer and a HCr (Hard Chromium Plating) coating layer.

17. The battery cell manufacturing device of claim 1,

wherein the substrate is transferred along a transfer direction of the transfer unit so as to have a predetermined separation gap from adjacent substrates, and
the upper roller is in contact with the transfer unit within the separation gap when the upper roller passes between the adjacent substrates.

18. The battery cell manufacturing device of claim 17, wherein a radius of the upper roller is determined based on the predetermined separation gap.

19. The battery cell manufacturing device of claim 18, wherein the radius of the upper roller is smaller than or equal to a radius of the lower roller.

[FIG. 1]

[FIG. 2]

[FIG. 3]

[FIG. 4]

[FIG. 5]

[FIG. 6]

[FIG. 7]

[FIG. 8]

## INTERNATIONAL SEARCH REPORT

| International application No. |
|---|
| **PCT/KR2024/017236** |

| A. | CLASSIFICATION OF SUBJECT MATTER |
|---|---|

**H01M 10/04**(2006.01)i; **G01B 5/06**(2006.01)i; **G01B 5/00**(2006.01)i

According to International Patent Classification (IPC) or to both national classification and IPC

| B. | FIELDS SEARCHED |
|---|---|

Minimum documentation searched (classification system followed by classification symbols)

H01M 10/04(2006.01); G01B 5/06(2006.01); G01N 15/08(2006.01); G01N 27/04(2006.01); G03G 15/20(2006.01); H01M 10/052(2010.01); H01M 4/133(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기재(substrate), 이송(transfer), 롤러(roller), 두께(thickness), 센싱(sensing), 전지 (battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2018-0093276 A (LG CHEM, LTD.) 22 August 2018 (2018-08-22)<br>See paragraphs [0008]-[0025] and figure 1. | 1-19 |
| Y | WO 2022-128073 A1 (BRUDERER AG) 23 June 2022 (2022-06-23)<br>See page 14, line 31-page 21, line 18, claim 1 and figures 1-5. | 1-19 |
| Y | KR 20-0162135 Y1 (SAMSUNG ELECTRONICS CO., LTD.) 01 December 1999 (1999-12-01)<br>See paragraphs [0013] and [0014] and figures 1-3. | 8-10 |
| Y | KR 10-2021-0030591 A (NAINTECH CO., LTD.) 18 March 2021 (2021-03-18)<br>See paragraph [0027] and figures 4 and 5. | 12,13 |
| Y | KR 10-2015-0037330 A (LG CHEM, LTD.) 08 April 2015 (2015-04-08)<br>See claims 1 and 3. | 16 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 February 2025** | **19 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/017236**

| Patent document cited in search report | | | Publication date (day/month/year) | Patent family member(s) | | | Publication date (day/month/year) |
|---|---|---|---|---|---|---|---|
| KR | 10-2018-0093276 | A | 22 August 2018 | CN | 110268244 | A | 20 September 2019 |
| | | | | CN | 110268244 | B | 24 May 2024 |
| | | | | EP | 3578953 | A1 | 11 December 2019 |
| | | | | EP | 3578953 | B1 | 05 April 2023 |
| | | | | JP | 2020-509528 | A | 26 March 2020 |
| | | | | JP | 6879525 | B2 | 02 June 2021 |
| | | | | KR | 10-2079134 | B1 | 19 February 2020 |
| | | | | US | 11495837 | B2 | 08 November 2022 |
| | | | | US | 2020-0020988 | A1 | 16 January 2020 |
| | | | | WO | 2018-147695 | A1 | 16 August 2018 |
| WO | 2022-128073 | A1 | 23 June 2022 | EP | 4237788 | A1 | 06 September 2023 |
| | | | | EP | 4237788 | B1 | 09 October 2024 |
| | | | | ES | 2991412 | T3 | 03 December 2024 |
| | | | | JP | 2024-503783 | A | 29 January 2024 |
| | | | | US | 2024-0033806 | A1 | 01 February 2024 |
| KR | 20-0162135 | Y1 | 01 December 1999 | KR | 20-1999-0010494 | U | 15 March 1999 |
| KR | 10-2021-0030591 | A | 18 March 2021 | KR | 10-2262339 | B1 | 08 June 2021 |
| KR | 10-2015-0037330 | A | 08 April 2015 | KR | 10-1709538 | B1 | 23 February 2017 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230151556
- KR 1020240154615